# EUROPÄISCHE PATENTSCHRIFT

(11) **EP 1 215 073 B1**
(45) Veröffentlichungstag und Bekanntmachung des Hinweises auf die Patenterteilung: **02.04.2008**
(21) Anmeldenummer: 01129677.9
(22) Anmeldetag: 13.12.2001
(51) Int. Cl.: B60L 3/10

(54) **Verfahren und Vorrichtung zur Regelung eines Antriebs für ein Schienenfahrzeug**
Drive control method and device for a railway vehicle
Méthode et dispositif de commande d'entraînement d'un véhicule ferroviaire

(30) Priorität: 14.12.2000 DE 10062439
(43) Veröffentlichungstag der Anmeldung: 19.06.2002
(73) Patentinhaber: Bombardier Transportation GmbH, 13627 Berlin (DE)
(72) Erfinder: Menth, Stefan, 5430 Wettingen (CH); Ehrler, Urs, 5412 Gebenstorf (CH); Lerjen, Markus, 5400 Baden (CH); Bregonzi, Mauro, 8003 Zürich (CH)
(74) Vertreter: Meyer, Hans-Joachim

(56) Entgegenhaltungen:
- EP-A- 0 452 898
- EP-A- 0 968 872
- DE-A- 3 338 319
- DE-A- 3 714 404
- DE-A- 4 225 683
- DE-A- 19 727 507

## Beschreibung

### Technisches Gebiet

Die Erfindung bezieht sich auf das Gebiet der Antriebstechnik. Sie geht aus von einem Verfahren und einer Vorrichtung zur Regelung eines Antriebs für ein Schienenfahrzeug gemäss dem Oberbegriff der unabhängigen Ansprüche.

### Stand der Technik

Bei elektrisch angetriebenen Schienenfahrzeugen mit geregelten Antriebsmotoren, insbesondere mit Asynchronmaschinen, kann es zu Schlupfzuständen zwischen Antriebsrädern und Schiene kommen, bei denen die Antriebsräder unkontrolliert mehr oder weniger stark durchdrehen. Hierdurch ergibt sich ein instabiler Betrieb des Fahrzeugantriebs, bei dem der maximal mögliche Kraftschluss zwischen Antriebsrädern und Schiene unterschritten wird. Zudem unterliegen sowohl die Antriebsräder als auch die Schiene einem erhöhten Verschleiss. Ein Lösungsvorschlag für dieses Problems ist in der DE 197 27 507 A1 angegeben. Dort ist eine Motorregelungseinheit offenbart, die als Ständerfrequenzregelungseinheit ausgebildet ist und an der Motorwelle eine abfallende Drehzahl-Drehmoment-Kennlinie erzeugt. Deren Steilheit kann verändert werden. Der Ständerfrequenzregelungseinheit übergeordnet ist eine Traktionsregelungseinheit, die die Aufgabe hat, den Schlupf zwischen Rad und Schiene bei maximal möglicher Zugkraft des Schienenfahrzeugs zu minimieren.

Eine vorstehend verwendete, heute übliche Traktionsregelungseinheit generiert am Ausgang einen Leerlaufständerfrequenzsollwert. Weiterhin wird durch einen Kennlinienbildner eine abfallende Arbeitskennlinie erzeugt, die in ihrer Steigung durch Parametereinstellungen variiert werden kann. Der Kennlinienbildner generiert die Arbeitskennlinie aus einem Zugkraftistwert, wobei der Zugkraftistwert von einem Motorbeobachter aus einem geschätzten und zu dem Zugkraftistwert korrelierenden Drehmomentistwert abgeleitet wird. Die Arbeitskennlinie ist ein Abbild einer typischen Drehzahl-Drehmomentcharakteristik einer Asynchronmaschine. Als Ausgangsgrösse des Kennlinienbildners wird ein Kennlinienständerfrequenzsollwert ausgeben, der vom Leerlaufständerfrequenzsollwert der Traktionsregelungseinheit subtrahiert wird. Mittels dieser Subtraktion wird erreicht, dass ein Ständerfrequenzsollwert erzeugt wird, der der Ständerfrequenzregelungseinheit vorgegeben wird, die Schaltbefehlsignale an einen den Antrieb speisenden Antriebsstromrichter ausgibt.

Durch eine Änderung des von der Traktionsregelungseinheit vorgegebenen Leerlaufständerfrequenzsollwertes in Abhängigkeit vom Kraftschluss zwischen Rädern und Schiene und mittels des vom Kennlinienbildner ausgegebenen Kennlinienständerfrequenzsollwertes wird ein gewünschter Arbeitspunkt der Arbeitskennlinie auf einer typischen Kraftschlusskennlinie eingestellt, d.h. es wird versucht, den vom Schienenfahrzeugführer vorgewählten Zugkraftsollwert bei unterschiedlichen Schienenzuständen zu erreichen und zu stabilisieren.

Problematisch bei derartigen Einflussnahmen durch die Traktionsregelungseinheit und durch den Kennlinienbildner auf eine Zugkraftsollwertvorgabe ist, dass auf sich schnell ändernde Übergänge auf der Kraftschlusskennlinie, hervorgerufen durch sich schlagartig ändernde Schienenverhältnisse, wie sie durch Wettereinflüsse und/oder durch Verschmutzung beispielsweise in einem Gleisbogen auftreten können, nicht schnell und nicht differenziert genug seitens der Traktionsregelungseinheit und seitens des Kennlinienbildners mit den entsprechenden Änderungen der Stellgrössen Leerlaufständerfrequenzsollwert beziehungsweise Kennlinienständerfrequenzsollwert reagiert werden kann. Als Folge ergibt sich ein erhöhter Verschleiss der Räder und der Schiene aufgrund des auftretenden Rad-Schienenschlupfes bis dieser Schlupf durch die Eingriffe der Traktionsregelungseinheit und des Kennlinienbildners minimiert ist. Weiterhin werden durch die für die Minimierung des Schlupfes notwendigen drastischen Eingriffe der Traktionsregelungseinheit und des Kennlinienbildner durch eine entsprechende Vorgabe des Ständerfrequenzsollwertes für die Ständerfrequenzregelungseinheit der Antriebsmotor und die damit verbundenen mechanischen Einheiten, wie beispielsweise Getriebe sowie der Zughaken starken mechanischen Belastungen unterworfen, die erst bei Erreichen des minimalen Schlupfes tragbar sind.

In der DE 33 38 319 A1 sind ein Verfahren und eine Vorrichtung zur Steuerung des magnetischen Flusses einer Asynchronmaschine beschrieben, die zum Antrieb eines dieselelektrischen Triebfahrzeuges dient und über einen Gleichrichter, einen Gleichspannungszwischenkreis und einen Wechselrichter mit variabler Spannung und Frequenz gespeist wird. Die Steuerung des magnetischen Flusses erfolgt durch Vorgabe entsprechender Werte für die Ständerfrequenz und die Ständerspannung und damit für die Schlupffrequenz und den Ständerstrom mittels zweidimensionaler Kennliniengeber in Abhängigkeit von einer die Leistung bzw. das Drehmoment bestimmenden Führungsgröße und der Drehfrequenz. Beim Bremsen des dieselelektrischen Triebfahrzeuges werden Bremswiderstände im Gleichspannungszwischenkreis zugeschaltet, was eine Änderung der Zwischenkreisspannung zur Folge hat. Um das Drehmoment (Bremsmoment) trotz sinkender Zwischenkreisspannung konstant zu halten, wird die Schlupffrequenz umgekehrt proportional zum Quadrat der Zwischenkreisspannung verändert, jedoch maximal auf den Wert der Kipp-Schlupffrequenz begrenzt. Die Ständerfrequenz wird dabei durch Addition der Schlupffrequenz mit der Drehfrequenz gebildet.

### Darstellung der Erfindung

Aufgabe der vorliegenden Erfindung ist es deshalb, ein Verfahren zur Regelung eines Antriebs für ein Schienenfahrzeug anzugeben, durch welches ein optimaler und stabiler Zugkraftistwert bei unterschiedlichen Kraftschlüssen zwischen Rädern und Schiene erreicht wird, sowie eine Vorrichtung anzugeben, mit der das Verfahren durchgeführt wird. Diese Aufgabe wird durch die Merkmale der unabhängigen Ansprüche gelöst. In den Unteransprüchen sind vorteilhafte Weiterbildungen der Erfindung angegeben.

Beim erfindungsgemässen Verfahren mit den Merkmalen nach Anspruch 1 wird ein Leerlaufständerfrequenzsollwert aus einem vorwählbaren Zugkraftsollwert und einem aktuellen Zugkraftistwert durch eine Traktionsregelungseinheit gebildet. Danach wird aus dem aktuellen Zugkraftistwert ein Kennlinienständerfrequenzsollwert durch einen Kennlinienbildner gebildet und durch Subtraktion des Kennlinienständerfrequenzsollwertes vom Leerlaufständerfrequenzsollwert ein Regelungsständerfreguenzsollwert erzeugt. Dieser Regelungsständerfrequenzsollwert wird dann als Ständerfrequenzsollwert einer Ständerfrequenzregelungseinheit vorgegeben. Ferner wird ein Reglerfrequenzwert aus einer Mehrzahl von gebildeten Reglerfrequenzwerten als Leerlaufständerfrequenzsollwert in Abhängigkeit von der Größe des Zugkraftsollwertes bezüglich des Zugkraftistwertes aufgeschaltet.
Erfindungsgemäß wird ein erster Reglerfrequenzwert aus dem Zugkraftsollwert und dem Zugkraftistwert als Ausgangsgröße eines als Proportional-Integral-Regler ausgeführten Zugkraftreglers gebildet. Zudem wird ein zweiter Reglerfrequenzwert aus dem Zugkraftistwert und einem Achsgeschwindigkeitswert des Antriebs als Ausgangsgröße eines Zugkraftoptimierers gebildet. Im Falle, dass der Zugkraftsollwert kleiner ist als der Zugkraftistwert, wird der erste Reglerfrequenzwert als Leerlaufständerfrequenzsollwert aufgeschaltet, während im Falle, dass der Zugkraftsollwert größer ist als der Zugkraftistwert und dass der Achsgeschwindigkeitswert wesentlich größer ist als ein Fahrzeuggeschwindigkeitswert, der zweite Reglerfrequenzwert als Leerlaufständerfrequenzsollwert aufgeschaltet wird. Dadurch wird äußerst vorteilhaft erreicht, dass besonders einfach und schnell auf mögliche unterschiedliche Kraftschlüsse zwischen Rädern und Schiene bei Vorgabe eines Zugkraftsollwertes reagiert werden kann und damit ein optimaler und vor allem stabiler Zugkraftistwert erreicht wird, ohne dass beispielsweise Schwingungen oder starke Reduktionen des Zugkraftistwertes auftreten. Weiterhin wird die Abnutzung der Schiene und der Räder reduziert und mechanische Belastungen von mechanischen Einheiten minimiert.

Die erfindungsgemäße Vorrichtung mit dem Merkmalen nach Anspruch 4 zur Regelung eines Antriebs für ein Schienenfahrzeug weist eine als Ständerfrequenzregelungseinheit ausgebildete Motorregelungseinheit, eine Traktionsregelungseinheit und einen Kennlinienbildner auf, wobei die Traktionsregelungseinheit eine Zustandserkennungseinheit umfasst, der der aktuelle Zugkraftistwert, der Zugkraftsollwert, ein Achsgeschwindigkeitswert und ein Fahrzeuggeschwindigkeitswert zugeführt sind. Darüber hinaus ist die Zustandserkennungseinheit erfindungsgemäß mit einer Aufschaltungseinrichtung verbunden, wobei die Zustandserkennungseinheit die Aufschaltungseinrichtung durch ein Aufschaltsignal betätigt. Die Aufschaltungseinrichtung führt die Betätigung durch die Zustandserkennungseinheit mittels des Aufschaltsignals vorteilhaft derart aus, dass ein Reglerfrequenzwert der aus einer Mehrzahl von gebildeten Reglerfrequenzwerten als Leerlaufständerfrequenzsollwert in Abhängigkeit von der Größe des Zugkraftsollwertes bezüglich des Zugkraftistwertes aufgeschaltet wird. Erfindungsgemäß ist dabei ein mit einem Eingang der Aufschaltungseinrichtung verbundener Zugkraftregler zur Bildung eines ersten Reglerfrequenzwertes vorgesehen, wobei dem Zugkraftregler der Zugkraftistwert und der Zugkraftsollwert zugeführt ist. Ferner ist ein mit einem weiteren Eingang der Aufschaltungseinrichtung verbundener Zugkraftoptimierer zur Bildung eines zweiten Reglerfrequenzwertes vorgesehen, wobei dem Zugkraftoptimierer der Zugkraftistwert und der Achsgeschwindigkeitswert zugeführt sind und wobei der Addierer mit dem Ausgang der Aufschaltungseinrichtung verbunden ist.

Weiterhin wird vorteilhaft eine Vorrichtung ausgebildet, die aufgrund ihres einfachen und mit wenigen Elementen auskommenden Aufbaus sowohl mit diskreten Bauelementen realisiert als auch beispielsweise in einem digitalen Mikroprozessor implementiert werden kann. Sie stellt somit eine einfache und kostengünstige Lösung dar, die zusätzlich variabel umgesetzt und an verschiedenste Antriebe angepasst werden kann.

Diese und weitere Aufgaben, Vorteile und Merkmale der vorliegenden Erfindung werden aus der nachfolgenden Beschreibung eines bevorzugten Ausführungsbeispiels der Erfindung offensichtlich.

### Kurze Beschreibung der Zeichnungen

Es zeigen:
- **Fig. 1**: eine Ausführungsform einer erfindungsgemässen Vorrichtung zur Regelung eines Antriebs für ein Schienenfahrzeug,
- **Fig. 2**: ein Ablaufdiagramm eines erfindungsgemässen Verfahrens zur Regelung eines Antriebs für ein Schienenfahrzeug und
- **Fig. 3**: eine typische Kraftschlusskennlinie mit einer gebildeten Antriebskennlinie.

Grundsätzlich sind in den Figuren gleiche Teile mit gleichen Bezugszeichen versehen.

### Wege zur Ausführung der Erfindung

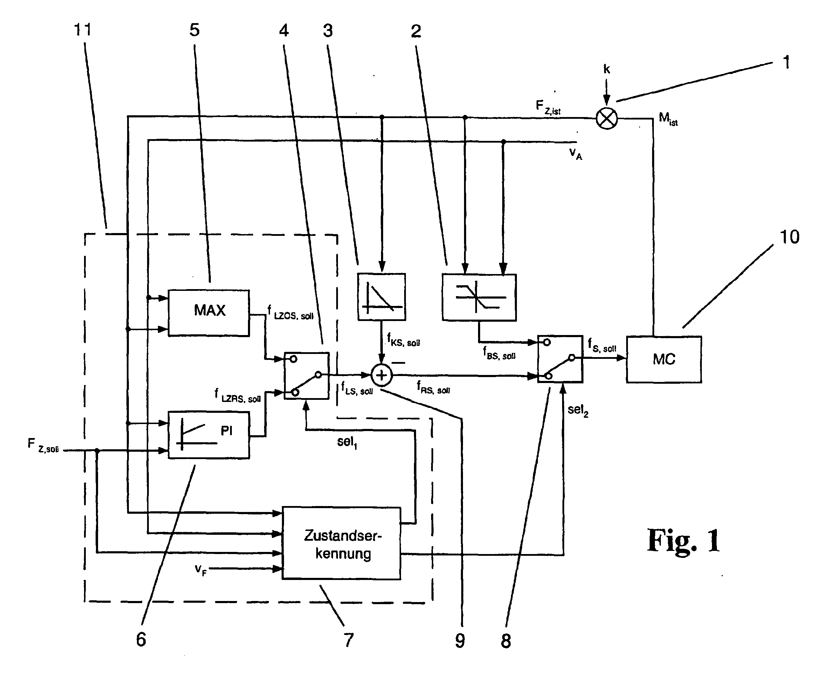

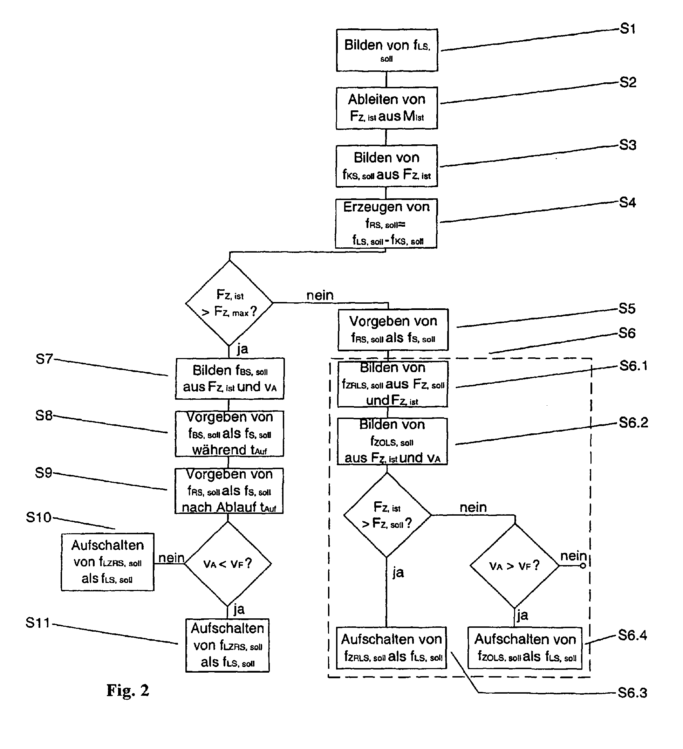

Fig. 1 zeigt eine erfindungsgemässe Ausführungsform der Vorrichtung zur Regelung eines Antriebs für ein Schienenfahrzeug. In Fig. 2 ist zudem ein Ablaufdiagramm des erfindungsgemässen Verfahrens zur Regelung eines Antriebs für ein Schienenfahrzeug dargestellt.

Gemäss dem in Fig. 2 gezeigten Ablaufdiagramm des erfindungsgemässen Verfahrens wird in einem ersten Verfahrensschritt (S1) ein Leerlaufständerfrequenzsollwert f_{LS,soll} aus einem beispielsweise von einem Fahrzeugführer vorwählbaren Zugkraftsollwert F_{Z,soll} und einem aktuellen Zugkraftistwert F_{Z,ist} in einer dafür vorgesehenen Traktionsregelungseinheit 11 gebildet. Diese Bildung des Leerlaufständerfrequenzsollwertes f_{LS,soll} wird im folgenden beschrieben.

Der zur Bildung des Leerlaufständerfrequenzsollwertes f_{LS, soll} benötigte Zugkraftistwert F_{Z,ist} wird in einer als Ständerfrequenzregelungseinheit 10 ausgeführten Motorregelungseinheit aus einem von einem Motorbeobachter geschätzten und zu dem Zugkraftistwert F_{Z,ist} korrelierenden Drehmomentistwert Mᵢₛₜ abgeleitet (S2). Anschliessend wird gemäss Fig. 2 ein Kennlinienständerfrequenzsollwert f_{KS, soll} aus dem Zugkraftistwert F_{Z,ist} in einem dafür vorgesehenen Kennlinienbildner 3 durch eine Filterung des Zugkraftistwertes F_{Z,ist} gebildet (S3). Der Kennlinienbildner 3 hat die Aufgabe, eine abfallende Arbeitskennlinie zu erzeugen, wobei die Arbeitskennlinie ein Abbild einer typischen Drehzahl-Drehmomentcharakteristik einer Asynchronmaschine ist. Die Ausgangsgrösse des Kennlinienbildners ist der Kennlinienständerfrequenzsollwert f_{KS, soll}, die dieser Arbeitskennlinie entspricht. Nach der Bildung des Kennlinienständerfrequenzsollwertes f_{KS, soll} wird durch eine Subtraktion des Kennlinienständerfrequenzsollwertes f_{KS,soll} vom Leerlaufständerfrequenzsollwert f_{LS, soll} ein Regelungsständerfrequenzsollwert f_{RS,soll} erzeugt (S4). Dieser Regelungsständerfrequenzsollwert f_{RS, soll} wird der Ständerfrequenzregelungseinheit 10 als Ständerfrequenzsollwert f_{S,soll} vorgeben (S5), die Schaltbefehlsignale an einen zur Speisung des Antriebs vorgesehenen Antriebsstromrichter ausgibt.

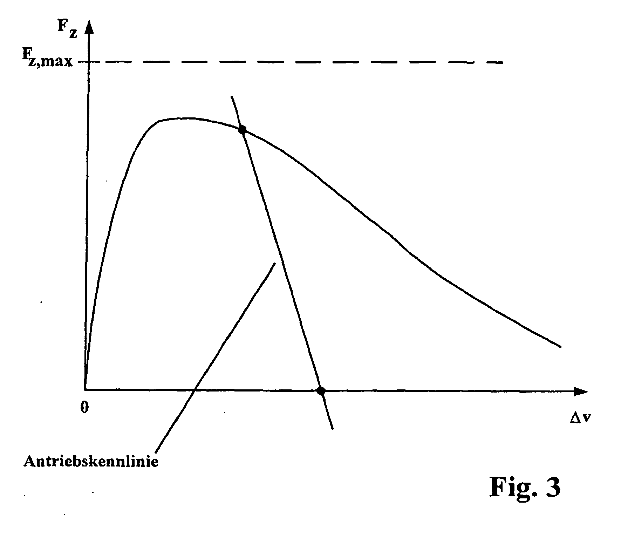

Zur Bildung des Leerlaufständerfrequenzsollwertes f_{LS}, ₛₒₗₗ in der Traktionsregelungseinheit 11 wird erfindungsgemäss in einem weiteren Verfahrensschritt (S6) ein Reglerfrequenzwert f_{LZOS, soll,} f_{LZRS, soll} aus einer Mehrzahl von gebildeten Reglerfrequenzwerten f_{LZOS, soll}, f_{LZRS soll}, insbesondere ein erster Reglerfrequenzwert f_{LZRS, soll} oder ein zweiter Reglerfrequenzwert f_{LZOS, soll} als Leerlaufständerfrequenzsollwert f_{LS}. ₛₒₗₗ in Abhängigkeit von der Grösse des Zugkraftsollwertes F_{Z,soll} bezüglich des Zugkraftistwertes F_{Z,ist} aufgeschaltet. Durch diese differenzierte Aufschaltung wird erreicht, dass die Arbeitskennlinie auf einer in Fig. 3 gezeigten typischen Kraftschlusskennlinie derart verschoben werden kann, dass ein optimaler und insbesondere stabiler Zugkraftistwert F_{Z,ist} beziehungsweise Arbeitspunkt, der als Schnittpunkt der Arbeitskennlinie mit der Kraftschlusskennlinie definiert ist, erzielt werden kann. Zunächst wird aus dem Zugkraftistwert F_{Z,ist} und dem Zugkraftsollwert F_{Z,soll} der erste Reglerfrequenzwert f_{LZRS, soll} als Ausgangsgrösse eines Zugkraftreglers 6 gebildet (S6.1). Parallel dazu wird in einem weiteren Verfahrensschritt (S6.2) aus dem Zugkraftistwert F_{Z,ist} und einem Achsgeschwindigkeitswert v_{A} der Asynchronmaschine des Antriebs der zweite Reglerfrequenzwert f_{LZOS, soll} als Ausgangsgrösse eines Zugkraftoptimierers 5 gebildet. Im Falle, dass der Zugkraftsollwert F_{Z,soll} grösser ist als der Zugkraftistwert F_{Z,ist}, wird erfindungsgemäss in einem weiteren Verfahrensschritt (S6.3) der erste Reglerfrequenzwert f_{LZRS,soll} als Leerlaufständerfrequenzsollwert f_{LS, soll} aufgeschaltet. In der in Fig. 3 dargestellten typischen Kraftschlusskennlinie entspricht diese Bedingung dem Bereich des ansteigenden Astes der Kraftschlusskennlinie für kleine Werte einer Differenzgeschwindigkeit Δv, die als Differenz zwischen dem Achsgeschwindigkeitswert v_{A} und einem Fahrzeuggeschwindigkeitswert v_{F} definiert ist. Der Bereich der Kraftschlusskennlinie ist bei einer fortlaufenden Verbesserung des Schienenzustandes, d.h. wenn sich der Reibungskoeffizient zwischen Rädern vergrössert, für die Kraftschlusscharakteristik massgebend.

Wie vorstehend beschrieben, wird für diesen Bereich der Kraftschlusskennlinie der erste Reglerfrequenzwert f_{LZRS, soll} als Leerlaufständerfrequenzsollwert f_{LS, soll} aufgeschaltet, der im dafür vorgesehenen Zugkraftregler 6 gebildet wird. Da der Zugkraftregler 6, der vorzugsweise eine Proportional-Integral-Charakteristik aufweist, in diesem Bereich besonders effektiv durch eine ausreichend grosse Regelbandbreite arbeitet, kann der Zugkraftistwert F_{Z,ist} sehr schnell und ohne wesentliche Schwingungen auf den vorgegebenen Zugkraftsollwert F_{Z,soll} ausgeregelt werden, so dass ein stabiler Zugkraftistwert F_{Z,ist} erreicht werden kann. Durch die Vermeidung wesentlicher Schwingungen des Zugkraftistwertes F_{Z,ist} werden mechanische Belastungen der mechanischen Einheiten und die Abnutzung von Rädern und Schiene vorteilhaft reduziert.

Gemäss Fig. 2 wird im Falle, dass der Zugkraftsollwert F_{Z,soll} grösser als der Zugkraftistwert F_{Z,ist} ist und dass zudem der Achsgeschwindigkeitswert v_{A} wesentlich grösser als der Fahrzeuggeschwindigkeitswert v_{F} ist, der zweite Reglerfrequenzwert f_{LZOS, soll}, der in bereits beschriebener Weise aus dem Zugkraftistwert F_{Z,ist} und dem Achsgeschwindigkeitswert v_{A} als Ausgangsgrösse des Zugkraftoptimierers 5 gebildet wird, als Leerlaufständerfrequenzsollwert f_{LS, soll} aufgeschaltet. In der in Fig. 3 dargestellten typischen Kraftschlusskennlinie entspricht diese Bedingung dem Bereich des dem Kraftschlussmaximum folgenden abfallenden Astes der Kraftschlusskennlinie für grosse Werte der Differenzgeschwindigkeit Δv. Dieser Bereich der Kraftschlusskennlinie ist bei einer Verschlechterung des Schienenzustandes, d.h. wenn sich der Reibungskoeffizient zwischen Rädern und Schiene verkleinert, für die Kraftschlusscharakteristik relevant.

Der als Leerlaufständerfrequenzsollwert f_{LS, soll} für diesen Bereich der Kraftschlusskennlinie aufgeschaltete zweite Reglerfrequenzwert f_{LZOS, soll} wird, wie vorstehend erläutert, in dem dafür vorgesehenen Zugkraftoptimierer 5 gebildet. Der Zugkraftoptimierer 5 verschiebt die Arbeitskennlinie derart, dass der Arbeitspunkt nahe dem Kraftschlussmaximums eingestellt und stabilisiert wird. Durch diese Einstellung des Arbeitspunktes wird vorteilhaft der nahezu maximal mögliche Zugkraftistwert F_{Z,ist} selbst bei schlechten Schienenbedingungen erreicht, ohne dass die Schiene und/oder die Räder zu stark verschlissen werden und ohne dass mechanische Schwingungen die mechanischen Einheiten stark belasten.

Bei einer schlagartigen Verbesserung des Schienenzustandes, d.h. wenn sich der Reibungskoeffizient zwischen Rädern und Schiene schnell vergrössert, kann ein maximal zulässiger Zugkraftistwert F_{Z,ist} überschritten werden. Damit dadurch die Schiene und Räder nicht zu stark verschlissen werden und die mechanischen Belastungen der mechanischen Einheiten, insbesondere der Zughacken nicht zu hoch werden, wird erfindungsgemäss in einem weiteren Verfahrensschritt (S7) gemäss Fig. 2 aus dem Zugkraftistwert F_{Z,ist} und dem Achsgeschwindigkeitswert v_{A} ein Ständerfrequenzbegrenzungssollwert f_{BS, soll} als Ausgangsgrösse einer Begrenzungseinrichtung 2 gebildet. Danach wird im Falle, dass der Zugkraftistwert F_{Z,ist} grösser als der vorgegebene Zugkraftmaximalwert F_{Zmax} ist, der gebildete Ständerfrequenzbegrenzungssollwert f_{BS,soll} als Ständerfrequenzsollwert f_{S,soll} an die Ständerfrequenzregelungseinheit 10 während einer vorgewählten Aufschaltzeit t_{Auf} anstelle des Regelungsständerfrequenzsollwertes f_{RS,soll} vorgegeben (S8). Dadurch wird vorteilhaft der Ständerfrequenzsollwert f_{S, soll} für die gewählte Aufschaltzeit t_{Auf} begrenzt und zwar unabhängig, ob als Leerlaufständerfrequenzsollwert f_{LS,soll} der erste Reglerfrequenzwert f_{LZRS, soll} oder der zweite Reglerfrequenzwert f_{LZOS, soll} aufgeschaltet ist. Durch die Begrenzung des Ständerfrequenzsollwertes f_{S,soll} stellt sich der Zugkraftistwert F_{Z,ist} unterhalb des Zugkraftmaximalwertes F_{Zmax} ein. Nach Ablauf der Aufschaltzeit t_{Auf} wird der Regelungsständerfrequenzsollwert f_{RS,soll} als Ständerfrequenzsollwert f_{S, soll} an die Ständerfrequenzregelungseinheit 10 vorgegeben (S9).

Anschliessend wird entweder der zweite Reglerfrequenzwert f_{LZOS,soll} als Leerlaufständerfrequenzsollwert f_{LS, soll} aufgeschaltet (S10) oder es wird im Falle, dass der Achsgeschwindigkeitswert V_{A} kleiner ist als der Fahrzeuggeschwindigkeitswert V_{F} ist, der erste Reglerfrequenzwert f_{LZRS, soll} als Leerlaufständerfrequenzsollwert f_{LS, soll} aufgeschaltet (S 11). Somit wird nach der beschriebenen Begrenzung des Ständerfrequenzsollwertes f_{S, soll} je nach Schienenverhältnisse der Arbeitspunkt nahe dem Kraftschlussmaximum mittels des Zugkraftoptimierers 5 eingestellt oder der Zugkraftistwert F_{Z, ist} mittels des Zugkraftreglers 6 sehr schnell und ohne wesentliche Schwingungen auf den vorgegebenen Zugkraftsollwert F_{Z,soll} ausgeregelt.

Bei der erfindungsgemässen Vorrichtung zur Regelung eines Antriebs für eine Schienenfahrzeug gemäss Fig. 1 weist der Antrieb einen als Asynchronmaschine ausgebildeten Antriebsmotor auf, der der Übersichtlichkeit halber in Fig. 1 nicht dargestellt ist. Darüber hinaus umfasst die Vorrichtung eine als Ständerfrequenzregelungseinheit 10 ausgebildete Motorregelungseinheit und eine Traktionsregelungseinheit 11, die der Bildung des Leerlaufständerfrequenzsollwertes f_{LS, soll} dient. Desweiteren ist der bereits erwähnte Kennlinienbildner 3 vorgesehen. Die Traktionsregelungseinheit 11 und der Kennlinienbildner sind mit einem Addierer 9 verbunden, der durch Subtraktion des Kennlinienständerfrequenzsollwert d_{KS}, ₛₒₗₗ vom Leerlaufständerfrequenzsollwert f_{LS, soll} den Regelungsständerfrequenzsollwert f_{RS, soll} bildet und gemäss Fig. 1 den Regelungsständerfrequenzsollwert f_{RS, soll} der Ständerfrequenzregelungseinheit 10 als Ständerfrequenzsollwert f_{S, soll} vorgibt.

Erfindungsgemäss weist die Traktionsregelungseinheit 11 gemäss Fig. 1 eine Zustandserkennungseinheit 7 auf, der der aktuelle Zugkraftistwert F_{Z,ist}, der Zugkraftsollwert F_{Z,soll}, der Achsgeschwindigkeitswert v_{A} und der Fahrzeuggeschwindigkeitswert V_{F} zugeführt sind, wobei die Zustandserkennungseinheit 7 mit einer ersten Aufschalteinrichtung 4 verbunden ist, die durch die Zustandserkennungseinheit 7 durch ein erstes Aufschaltsignal sel₁, das von der Zustandserkennungseinheit 7 ausgegeben wird, betätigt wird. Der Zugkraftistwert F_{Z,ist} wird in der Ständerfrequenzregelungseinheit 10 aus einem von einem Motorbeobachter geschätzten und zu dem Zugkraftistwert F_{Z,ist} korrelierenden Drehmomentistwert Mᵢₛₜ abgeleitet und durch einen Umskalierer 1 durch Multiplikation mit einem Faktor k gebildet. Weiterhin stellt ein herkömmlicher, in Fig. 1 der Übersichtlichkeit wegen nicht dargestellter Sensor den Achsgeschwindigkeitswert v_{A} bereit. Der Fahrzeuggeschwindigkeitswert v_{F} wird durch eine gängige Radarmessung, Laufachsenmessung oder durch einen Fahrzeuggeschwindigkeitsbeobachter ermittelt, wobei in Fig. 1 ausschliesslich die Bereitstellung des Fahrzeuggeschwindigkeitswertes v_{F} gezeigt ist. Ein Eingang der ersten Aufschalteinrichtung 4 ist darüber hinaus mit dem Zugkraftregler 6, der der Ausregelung des Zugkraftistwertes F_{Z,ist} auf den Zugkraftsollwert F_{Z,soll} dient, verbunden. Dem Zugkraftregler 6 ist dazu der Zugkraftsollwert F_{Z,soll} und der Zugkraftistwert F_{Z,ist} zugeführt, wobei der erste Reglerfrequenzwert f_{LZRS, soll} die Ausgangsgrösse des Zugkraftreglers 6 ist. Mit einem weiteren Eingang der Aufschalteinrichtung 4 ist erfindungsgemäss gemäss Fig. 1 der Zugkraftoptimierer 5 verbunden. Der Zugkraftoptimierer 5 stellt bei einer Verschlechterung der Schienenverhältnisse den Arbeitspunkt auf der in Fig. 3 gezeigten Kraftschlusskennlinie so ein, dass bei einer Verschlechterung der Schienenverhältnisse der nahezu maximal mögliche Zugkraftistwert F_{Z,ist} erreicht wird, ohne dass die Schiene und/oder die Räder zu stark verschlissen werden und ohne dass mechanische Schwingungen die mechanischen Einheiten stark belasten. Dazu sind dem Zugkraftoptimierer 5 der Zugkraftistwert F_{Z,ist} und der Achsgeschwindigkeitswert v_{A} zugeführt, wobei der zweite Reglerfrequenzwert f_{LZOS,soll} die Ausgangsgrösse des Zugkraftoptimierers 5 ist.

Die Betätigung der ersten Aufschalteinrichtung 4 erfolgt durch das erste Aufschaltsignal sel₁ der Zustandserkennungseinheit 7. In der Zustandserkennungseinheit 7 findet zunächst eine Auswertung der zugeführten Grössen statt. Ist beispielsweise der Zugkraftsollwert F_{Z,soll} kleiner als der Zugkraftistwert F_{Z,ist}, so wird das Aufschaltsignal sel₁ derart ausgegeben, dass die erste Aufschalteinrichtung 4 den ersten Reglerfrequenzwert f_{LZRS, soll}, wie bereits beschrieben, als Leerlaufständerfrequenzsollwert f_{LS, soll} aufschaltet. Ist hingegen der Zugkraftsollwert F_{Z,soll} grösser als der Zugkraftistwert F_{Z,ist} und zusätzlich der Achsgeschwindigkeitswert v_{A} grösser als der Fahrzeuggeschwindigkeitswert v_{F}, so wird das Aufschaltsignal sel₁ derart ausgegeben, dass die erste Aufschalteinrichtung 4 den zweiten Reglerfrequenzwert f_{LZOS, soll} als Leerlaufständerfrequenzsollwert f_{LS, soll} aufschaltet. Weiterhin ist der Addierer 9 mit dem Ausgang der ersten Aufschalteinrichtung 4 zur Zuführung des Leerlaufständerfrequenzsollwertes f_{LS, soll} verbunden.

Gemäss Fig. 2 ist die Zustandserkennungseinheit 7 erfindungsgemäss mit einer zweiten Aufschalteinrichtung 8 verbunden, die durch die Zustandserkennungseinheit 7 durch ein zweites Aufschaltsignal sel₂, das von der Zustandserkennungseinheit 7 ausgegeben wird, betätigt wird. Ein Eingang der zweiten Aufschalteinrichtung 8 ist zudem mit dem Addierer 9 zur Zuführung des Regelungsständerfrequenzsollwertes f_{RS, soll} verbunden. Liegt der Zugkraftistwert F_{Z,ist} unterhalb des vorgegebenen Zugkraftmaximalwertes F_{zmax}, dann wird das zweite Aufschaltsignal sel₂ von der Zustandserkennungseinheit 7 derart ausgegeben, dass die zweite Aufschalteinrichtung 8 den Regelungsständerfrequenzsollwert f_{RS, soll} als Ständerfrequenzsollwert f_{S, soll} aufschaltet und somit den Regelungsständerfrequenzsollwert f_{RS, soll} als Ständerfrequenzsollwert f_{S, soll} der Ständerfrequenzregelungseinheit 10, die mit dem Ausgang der zweiten Aufschalteinrichtung 8 verbunden ist, vorgibt. Ein weiterer Eingang der zweiten Aufschalteinrichtung 8 ist zur Zuführung des Ständerfrequenzbegrenzungssollwertes f_{BS, soll} mit der Begrenzungseinrichtung 2 verbunden. Der Begrenzungseinrichtung 2 sind zur Bildung des Ständerfrequenzbegrenzungssollwertes f_{BS,soll} der Zugkraftistwert F_{Z,ist} und der Achsgeschwindigkeitswert V_{A} zugeführt. Falls der Zugkraftistwert F_{Z,ist} grösser als der vorgegebene Zugkraftmaximalwert F_{Zmax} ist, wird das Aufschaltsignal sel₂ von der Zustandserkennungseinheit 7 derart für die vorgewählte Aufschaltzeit t_{Auf} ausgegeben, dass die zweite Aufschalteinrichtung 8 den gebildeten Ständerfrequenzbegrenzungssollwert f_{BS,soll} als Ständerfrequenzsollwert f_{S, soll} während der Aufschaltzeit t_{Auf} aufschaltet und somit, wie bereits beschrieben, der Ständerfrequenzregelungseinheit 10 den Ständerfrequenzbegrenzungssollwert t_{BS, soll} als Ständerfrequenzsollwert f_{S, soll} vorgibt. Nach Ablauf der Aufschaltzeit t_{Auf} erfolgt die Ausgabe des zweiten Aufschaltsignals sel₂ erneut derart, dass die zweite Aufschalteinrichtung 8 den Regelungsständerfrequenzsollwert f_{RS,soll} als Ständerfrequenzsollwert f_{S,soll} aufschaltet und somit den Regelungsständerfrequenzsollwert f_{RS,soll} als Ständerfrequenzsollwert f_{S,soll} der Ständerfrequenzregelungseinheit 10 vorgibt.

Erfindungsgemäss kann die Vorrichtung zur Regelung eines Antriebs für eine Schienenfahrzeug in mindestens einem in Fig. 1 nicht dargestellten digitalen Mikroprozessor implementiert werden, so dass vorteilhaft auf diskrete Bauteile verzichtet werden kann und eine Anpassung der Vorrichtung an Antriebsmotoren verschiedenster Anwendungen erleichtert wird und somit einfach vollzogen werden kann.

Es versteht sich, dass die Vorrichtung zur Durchführung des Verfahrens sowohl für jeweils einen Antriebsmotor als auch für mehrere Antriebsmotoren zusammen vorgesehen ist.

Weiterhin ist es offensichtlich, dass andere als die im Ausführungsbeispiel angegebenen Blöcke, Signale und Werte verwendet werden können.

Zusammenfassend offenbart die vorliegende Erfindung ein Verfahren zur Regelung eines Antriebs für ein Schienenfahrzeug angegeben, welches einen Leerlaufständerfrequenzsollwert f_{LS, soll} aus einem vorwählbaren Zugkraftsollwert F_{Z,soll} und einem aktuellen Zugkraftistwert F_{Z,ist} durch eine Traktionsregelungseinheit bildet und darüber hinaus einen Kennlinienständerfrequenzsollwert f_{KS, soll} aus dem aktuellen Zugkraftistwert F_{Z,ist} durch einen Kennlinienbildner bildet. Zudem wird ein Regelungsständerfrequenzsollwert f_{RS, soll} durch Subtraktion des Kennlinienständerfrequenzsoll wertes f_{KS, soll} vom Leerlaufständerfrequenzsollwert f_{LS, soll} erzeugt und der Regelungsständerfrequenzsollwert f_{Rg,soll} als Ständerfrequenzsollwert f_{S, soll} an die Ständerfrequenzregelungseinheit vorgegeben, wobei ein Reglerfrequenzwert f_{LZOS,soll} ; f_{LZRs, soll} aus einer Mehrzahl von gebildeten Reglerfrequenzwerten f_{LZOS,soll}; f_{LZRS, soll} als Leerlaufständerfrequenzsollwert f_{LS, soll} in Abhängigkeit von der Grösse des Zugkraftsollwertes F_{Z,soll} bezüglich des Zugkraftistwertes F_{Z,ist} aufgeschaltet wird. Desweiteren wird eine Vorrichtung zur Regelung eines Antriebs für ein Schienenfahrzeug angegeben.

## Patentansprüche

1. Verfahren zur Regelung eines Antriebs für ein Schienenfahrzeug, der mindestens einen als Asynchronmaschine ausgebildeten Antriebsmotor aufweist,
mit den Schritten
(S1) Bilden eines Leerlaufständerfrequenzsollwertes (f_{LS,soll}) aus einem vorwählbaren Zugkraftsollwert (F_{Z,soll}) und einem aktuellen Zugkraftistwert (F_{Z,ist}) durch eine Traktionsregelungseinheit (11), wobei
(S2) der Zugkraftistwert (F_{Z,ist}) in einer als Ständerfrequenzregelungseinheit (10) ausgebildeten Motorregelungseinheit aus einem dem Zugkraftistwert (F_{Z,ist}) entsprechenden Drehmomentistwert (Mᵢₛₜ) abgeleitet wird,
(S3) Bilden eines Kennlinienständerfrequenzsollwertes (f_{KS, soll}) aus dem aktuellen Zugkraftistwert (F_{Z,ist}) durch einen Kennlinienbildner (3),
(S4) Erzeugen eines Regelungsständerfrequenzsollwertes (f_{RS, soll}) durch Subtraktion des Kennlinienständerfrequenzsollwertes (f_{KS, soll}) vom Leerlaufständerfrequenzsollwert (f_{LS}, ₛₒₗₗ)
(S5) Vorgeben des Regelungsständerfrequenzsollwertes (f_{RS, soll}) als Ständerfrequenzsollwert (f_{S, soll}) an die Ständerfrequenzregelungseinheit (10),
(S6) Aufschalten eines Reglerfrequenzwertes (f_{LZOS, soll}; f_{LZRS, soll}) aus einer Mehrzahl von gebildeten Reglerfrequenzwerten (_{LZOS, soll}; f_{LZRS, soll}) als Leerlaufständerfrequenzsollwert (f_{LS, soll}) in Abhängigkeit von der Grösse des Zugkraftsollwertes (F_{Z,soll}) bezüglich des Zugkraftistwertes (F_{Z, ist}),
**gekennzeichnet durch** die weiteren Schritte
(S6.1) Bilden eines ersten Reglerfrequenzwertes (f_{LZRS, soll}) aus dem Zugkraftsollwert (F_{Z,soll}) und dem Zugkraftistwert (F_{Z,ist}) als Ausgangsgrösse eines als Proportional-Integral-Regler ausgeführten Zugkraftreglers (6),
(S6.2) Bilden eines zweiten Reglerfrequenzwertes (f_{LZOS, soll}) aus dem Zugkraftistwert (F_{Z,ist}) und einem Achsgeschwindigkeitswert (v_{A}) des Antriebs als Ausgangsgrösse eines Zugkraftoptimierers (5),
(S6.3) Aufschalten des ersten Reglerfrequenzwertes (f_{L2RS, soll}) als Leerlaufständerfrequenzsollwert (f_{LS, soll}) im Falle, dass der Zugkraftsollwert (F_{Z,soll}) kleiner ist als der Zugkraftistwert (F_{Z,ist})
oder
(S6.4) Aufschalten des zweiten Reglerfrequenzwertes (f_{LZOS, soll}) als Leerlaufständerfrequenzsollwert (f_{LS, soll}) im Falle, dass der Zugkraftsollwert (F_{Z,soll}) grösser ist als der Zugkraftistwert (F_{Z.ist}) und dass der Achsgeschwindigkeitswert (v_{A}) wesentlich grösser ist als ein Fahrzeuggeschwindigkeitswert (v_{F}).

2. Verfahren nach Anspruch 1, **gekennzeichnet durch** die weiteren Schritte
(S7) Bilden eines Ständerfrequenzbegrenzungssollwertes (f_{BS, soll}) aus dem Zugkraftistwert (F_{Z,ist}) und dem Achsgeschwindigkeitswert (V_{A}) als Ausgangsgrösse einer Begrenzungseinrichtung (2),
(S8) Vorgeben des Ständerfrequenzbegrenzungssollwertes (f_{BS, soll}) als Ständerfrequenzsollwert (f_{S,soll}) an die Ständerfrequenzregelungseinheit (10) anstelle des Regelungsständerfrequenzsollwertes (f_{RS, soll}) während eine vorgewählte Aufschaltzeit (t_{Auf}) im Falle, dass der Zugkraftistwert (F_{Z,ist}) grösser ist als ein vorgegebener Zugkraftmaximalwert (F_{Zmax}).

3. Verfahren nach Anspruch 2, **gekennzeichnet durch** die weiteren Schritte
(S9) Vorgeben des Regelungsständerfrequenzsollwertes (f_{RS, soll}) als Ständerfrequenzsollwert (f_{S, soll}) an die Ständerfrequenzregelungseinheit (10) nach Ablauf der Aufschaltzeit (t_{Auf}),
(S 10) Aufschalten des zweiten Reglerfrequenzwertes (f_{LZOS,soll}) als Leerlaufständerfrequenzsollwert (f_{LS, soll}) oder
(S 11) Aufschalten des ersten Reglerfrequenzwertes (f_{LZRS,soll)} als Leerlaufständerfrequenzsollwert (f_{LS,soll}) im Falle dass der Achsgeschwindigkeitswert (v_{A}) kleiner ist als der Fahrzeuggeschwindigkeitswert (v_{F}).

4. Vorrichtung zur Regelung eines Antriebs für ein Schienenfahrzeug, wobei der Antrieb mindestens einen als Asynchronmaschine ausgebildeten Antriebsmotor aufweist, mit einer als Ständerfrequenzregelungseinheit (10) ausgebildeten Motorregelungseinheit und einer Traktionsregelungseinheit (11), wobei die Traktionsregelungseinheit (11) einen Leerlaufständerfrequenzsollwert (f_{LS,soll}) bildet
und mit einem einen Kennlinienständerfrequenzsollwert (f_{KS, soll}) bildenden Kennlinienbildner (3), wobei der Kennlinienbildner (3) und die Traktionsregelungseinheit (11) mit einem Addierer (9) verbunden sind, der durch Subtraktion des Kennlinienständerfrequenzsollwertes (f_{KS, soll}) vom Leerlaufständerfrequenzsollwert (f_{LS, soll}) einen Regelungsständerfrequenzsollwert (f_{RS,soll}) bildet und den Regelungsständerfrequenzsollwert (f_{RS, soll}) der Ständerfrequenzregelungseinheit (10) als Ständerfrequenzsollwert (f_{S, soll}) vorgibt, wobei
die Traktionsregelungseinheit (11) eine Zustandserkennungseinheit (7) aufweist, der ein aktueller Zugkraftistwert (F_{Z,ist}), ein Zugkraftsollwert (F_{Z,soll}), ein Achsgeschwindigkeitswert (v_{A}) und Fahrzeuggeschwindigkeitswert (v_{F}) zugeführt sind und wobei die Zustandserkennungseinheit (7) mit einer Aufschalteinrichtung (4) verbunden ist, wobei die Zustandserkennungseinheit (7) die Aufschalteinrichtung (4) durch ein Aufschaltsignal (sel₁) betätigt, wobei
ein mit einem Eingang der Aufschalteinrichtung (4) verbundener Zugkraftregler (6) zur Bildung eines ersten Reglerfrequenzwertes (f_{LZRS, soll}) vorgesehen ist, wobei dem Zugkraftregler (6) der Zugkraftistwert (F_{Z,ist}) und der Zugkraftsollwert (F_{Z,soll}) zugeführt sind, wobei
ein mit einem weiteren Eingang der Aufschalteinrichtung (4) verbundener Zugkraftoptimierer (5) zur Bildung eines zweiten Reglerfrequenzwertes (f_{LZOS, soll}) vorgesehen ist, wobei dem Zugkraftoptimierer (5) der Zugkraftistwert (F_{Z,ist}) und der Achsgeschwindigkeitswert (v_{A}) zugeführt sind und wobei
der Addierer (9) mit dem Ausgang der Aufschalteinrichtung (4) verbunden ist.

5. Vorrichtung nach Anspruch 4, **dadurch gekennzeichnet, dass** der Zugkraftregler (6) als Proportional-Integral-Regler ausgeführt ist.

6. Vorrichtung nach Anspruch 4, **dadurch gekennzeichnet, dass** die Zustandserkennungseinheit (7) mit einer zweiten Aufschalteinrichtung (8) verbunden ist, wobei die Zustandserkennungseinheit (7) die zweite Aufschalteinrichtung (8) durch ein zweites Aufschaltsignal (sel₂) betätigt.

7. Vorrichtung nach Anspruch 6, **dadurch gekennzeichnet, dass** der Addierer (9) mit einem Eingang der zweiten Aufschalteinrichtung (8) verbunden ist,
dass eine mit einem weiteren Eingang der zweiten Aufschalteinrichtung (8) verbundene Begrenzungseinrichtung (2) zur Bildung eines Ständerfrequenzbegrenzungssollwertes (f_{BS, soll}) vorgesehen ist, wobei der Begrenzungseinrichtung (2) der Zugkraftistwert (F_{Z,ist}) und der Achsgeschwindigkeitswert (v_{A}) zugeführt sind und
dass die Ständerfrequenzregelungseinheit (10) mit dem Ausgang der zweiten Aufschalteinrichtung (8) verbunden ist.

8. Vorrichtung nach einem der Ansprüche 4 bis 7, **dadurch gekennzeichnet, dass** die Vorrichtung in mindestens einem digitalen Mikroprozessor implementiert ist.

## Claims

1. A method for controlling a drive for a rail vehicle, which comprises at least one drive motor, which is designed as an asynchronous machine,
comprising the steps
(S1) forming a desired no-load stator frequency value (f_{LS,des}) from a preselectable desired traction force value (F_{Z,des}) and a current actual traction force value (F_{Z,act}) by means of a traction control unit (11), wherein
(S2) the actual traction force value (F_{Z,act}) is derived from an actual torque value (M_{act}), which corresponds to the actual traction force value (F_{Z,act}) in a motor control unit, which is designed as a stator frequency control unit (10),
(S3) forming a desired characteristic curve stator frequency value (f_{KS,des}) from the current actual traction force value (F_{Z,act}) by means of a characteristic curve creator (3),
(S4) generating a desired control stator frequency value (f_{RS,des}) by subtracting the desired characteristic curve stator frequency value (f_{KS, des}) from the desired no-load stator frequency value (f_{LS,des}),
(S5) providing the desired control stator frequency value (f_{RS,des}) as desired stator frequency value (f_{S,des}) to the stator frequency control unit (10),
(S6) applying a control frequency value (f_{LZOS,des} ; f_{LZRS,des}) from a plurality of formed control frequency values (f_{LZOS,des}; f_{LZRS,des}) as desired no-load stator frequency value (f_{LS,des}) as a function of the size of the desired traction force value (F_{Z,des}) with regard to the actual traction force value (F_{Z,act}),
**characterized by** the further steps
(S6.1) forming a first control frequency value (f_{LZRS,des}) from the desired traction force value (F_{Z,des}) and the actual traction force value (F_{Z,act}) as output variable of a traction force controller (6) designed as a proportional integral controller,
(S6.2) forming a second control frequency value (f_{LZOS, des}) from the actual traction force value (F_{Z, act}) and an axle speed value (v_{A}) of the drive as output variable of a traction force optimizer (5),
(S6.3) applying the first control frequency value (f_{LZRS, des}) as desired no-load stator frequency value (f_{LS,des}) if the desired traction force value (F_{Z,des}) is less than the actual traction force value (F_{Z,act}) or
(S6.4) applying the second control frequency value (f_{LZOS, des}) as desired no-load stator frequency value (f_{LS, des}) if the desired traction force value (F_{Z,des}) is greater than the actual traction force value (F_{Z,act}) and if the axle speed value (v_{A}) is considerably greater than a vehicle speed value (v_{F}).

2. The method according to claim 1, **characterized by** the further steps
(S7) forming a desired stator frequency limiting value (f_{BS,des}) from the actual traction force value (F_{Z,act}) and the axle speed value (V_{A}) as output variable of a limiting device (2),
(S8) providing the desired stator frequency limiting value (f_{BS,des}) as desired stator frequency value (f_{S,des}) to the stator frequency control unit (10) instead of the desired control stator frequency value (f_{Rs,des}) during a preselected application time (tₐₚₚ) if the actual traction force value (F_{Z,act}) is greater than a provided maximum traction force value (F_{Zmax}).

3. The method according to claim 2, **characterized by** the further steps
(S9) providing the desired control stator frequency value (f_{RS,des}) as desired stator frequency value (f_{S,des}) to the stator frequency control unit (10) after the application time (tₐₚₚ) has ended,
(S10) applying the second control frequency value (f_{LZOS,des}) as desired no-load stator frequency value (f_{LS,des}) or
(S11) applying the first control frequency value (f_{LZRS,des}) as desired no-load stator frequency value (f_{LS,des}) if the axle speed value (V_{A}) is less than the vehicle speed value (V_{F}).

4. A device for controlling a drive for a rail vehicle, the drive comprising at least one drive motor, which is designed as an asynchronous machine,
comprising a motor control unit designed as a stator frequency control unit (11) and a traction control unit (11), wherein the traction control unit (11) forms a desired no-load stator frequency value (f_{LS,des}),
and comprising a characteristic curve creator (3), which forms a desired characteristic curve stator frequency value (f_{KS,des}), wherein the characteristic curve creator (3) and the traction control unit (11) are connected with an adder (9), which forms a desired control stator frequency value (f_{RS,des}) by subtracting the desired characteristic curve stator frequency value (f_{KS,des}) from the desired no-load stator frequency value (f_{LS,des}) and which provides the desired control stator frequency value (f_{RS,des}) as desired stator frequency value (f_{S,des}) to the stator frequency control unit (10), wherein
the traction control unit (11) comprises a state detection unit (7), to which a current actual traction force value (F_{Z,act}), a desired traction force value (FZ,_{des}), an axle speed value (v_{A}) and a vehicle speed value (V_{F}) are fed and that the state detection unit (7) is connected with an applying device (4), wherein the state detection unit (7) actuates the applying device (4) by means of an application signal (sel₁),
wherein a traction force controller (6), which is connected with an input of the applying device (4) is provided for forming a first control frequency value (f_{LZRS,des}), wherein the actual traction force value (F_{Z,act}) and the desired traction force value (F_{Z,des}) are fed to the traction force controller (6),
wherein a traction force optimizer (5), which is connected with a further input of the applying device (4), is provided for forming a second control frequency value (f_{LZOS,des}), wherein the actual traction force value (F_{Z,act}) and the axle speed value (V_{A}) are fed to the traction force optimizer (5) and
wherein the adder (9) is connected with the output of the applying device (4).

5. The device according to claim 4, **characterized in that** the traction force controller (6) is designed as a proportional integral controller.

6. The device according to claim 4, **characterized in that** the state detection unit (7) is connected with a second applying device (8), wherein the state detection unit (7) actuates the second applying device (8) by means of a second application signal (sel₂).

7. The device according to claim 6, **characterized in that** the adder (9) is connected with an input of the second applying device (8),
that a limiting device (2), which is connected with a further input of the second applying device (8) is provided for forming a desired stator frequency limiting value (f_{BS,des}), wherein the actual traction force value (F_{Z,act}) and the axle speed value (V_{A}) are fed to the limiting device (2), and
that the stator frequency control unit (10) is connected with the output of the second applying device (8).

8. The device according to one of claims 4 to 7,
**characterized in that** the device is implemented in at least one digital microprocessor.

## Revendications

1. Procédé de commande d'un entraînement d'un véhicule ferroviaire, qui présente au moins un moteur d'entraînement sous forme d'une machine asynchrone,
avec les étape de
(S1) formation d'une valeur seuil de fréquence statorique à vide (f_{LS}, ₛₑᵤᵢₗ) à partir d'une valeur seuil de force de traction (f_{Z}, ₛₑᵤᵢₗ) et d'une valeur instantanée réelle de force de traction (f_{Z, inst}) par une unité de commande de la traction (11), où
(S2) la valeur instantanée de force de traction (f_{Z, inst}) dérive, dans une unité de commande de moteur formée comme une unité de commande de fréquence statorique (10), d'une valeur instantanée du moment de force (Mᵢₙₛₜ) correspondant à la valeur instantanée de force de traction (f_{Z, inst}),
(S3) formation d'une valeur seuil de fréquence statorique de courbe caractéristique (f_{KS, seuil}) à partir d'une valeur instantanée de force de traction (f_{Z, inst}) par un dispositif formant une courbe caractéristique (3),
(S4) production d'une valeur seuil de fréquence statorique de commande f(_{RS, seuil}) par soustraction de la valeur seuil de fréquence statorique de courbe caractéristique (f_{KS, seuil}) depuis la valeur seuil de fréquence statorique à vide (f_{LS, seuil})
(S5) imposition de la valeur seuil de fréquence statorique de commande f(_{RS, seuil}) comme valeur seuil de fréquence statorique (f_{S, seuil}) sur l'unité de commande de la fréquence statorique (10)
(S6) application d'une valeur de fréquence de commande (f_{LZOS}, seuil ; f_{LZRS}, seuil) à partir d'une série de valeurs de fréquence de commande (f_{LZOS}, seuil ; f_{LZRS}, seuil) formées comme la valeur seuil de fréquence statorique à vide (f_{LS, seuil}) en fonction de l'ampleur de la valeur seuil de la force de traction (F_{Z, seuil}) concernant la valeur instantanée de la force de traction (F_{Z, inst}),
**caractérisé par** les étapes supplémentaires :
(S6.1) formation d'une première valeur de fréquence de commande (f_{LZRS, seuil}) à partir de la valeur seuil de la force de traction (F_{Z, seuil}) et de la valeur instantanée de la force de traction (F_{Z, inst}) comme grandeurs de départ d'un mécanisme de commande de force de traction (6) effectuée comme un mécanisme de commande intégrale-proportionnelle,
(S6.2) formation d'une deuxième valeur de fréquence de commande (f_{LZRS, seuil}) à partir de la valeur instantanée de la force de traction (F_{Z, inst}) et d'une valeur de la vitesse axiale (V_{A}) de l'entraînement comme grandeurs de départ d'un mécanisme d'optimalisation de force de traction (5),
(S6.3) application d'une première valeur de fréquence de commande (f_{LZRS, seuil}) comme valeur seuil de fréquence statorique à vide (f_{LS, seuil}) dans le cas où la valeur seuil de la force de traction (F_{Z, seuil}) est inférieure à la valeur instantanée de la force de traction (F_{Z, inst})
ou
(S6.4) application d'une deuxième valeur de fréquence de commande (f_{LZOS, seuil}) comme valeur seuil de fréquence statorique à vide (f_{LS}, ₛₑᵤᵢₗ) dans le cas où la valeur seuil de la force de traction (F_{Z}, ₛₑᵤᵢₗ) est supérieure à la valeur instantanée de la force de traction (F_{Z, inst}) et où la valeur de la vitesse axiale (V_{A}) est essentiellement plus grande qu'une valeur de la vitesse du véhicule (V_{F}).

2. Procédé selon la revendication 1, **caractérisé par** les étapes supplémentaires
(S7) formation d'une valeur seuil limite de la fréquence statorique (f_{BS, seuil}) à partir de la valeur instantanée de la force de traction (F_{Z, inst}) et de la valeur de la vitesse axiale (V_{A}) comme grandeurs de départ d'un dispositif de limitation (2),
(S8) imposition de la valeur seuil limite de la fréquence statorique (f_{BS, seuil}) comme valeur seuil de fréquence statorique (f_{S, seuil}) sur l'unité de commande de la fréquence statorique (10) à la place de la valeur seuil de fréquence statorique de commande f(_{RS,seuil}) pendant une période prédéterminée de application (tₐₚₚ) dans le cas où la valeur instantanée de la force de traction (F_{Z, inst}) est supérieure à une valeur maximale de la force de traction (F_{Zmax}) prédéterminée.

3. Procédé selon la revendication 2, **caractérisé par** les étapes supplémentaires
(S9) imposition de la valeur seuil de fréquence statorique de commande f(_{RS, seuil}) comme valeur seuil de fréquence statorique (f_{S}, ₛₑᵤᵢₗ) sur l'unité de commande de la fréquence statorique (10) après écoulement de la période de application (tₐₚₚ),
(S10) application de la deuxième valeur de fréquence de commande (f_{LZOS, seuil}) comme valeur seuil de fréquence statorique à vide (f_{LS, seuil}) ou
(S11) application de la première valeur de fréquence de commande (F_{LZRS, seuil}) comme valeur seuil de fréquence statorique à vide (f_{LS, seuil}) dans le cas où la vitesse axiale (V_{A}) est inférieure à la valeur de la vitesse du véhicule (V_{F}).

4. Dispositif de commande d'un entraînement pour véhicule ferroviaire, où l'entraînement présente au moins un moteur d'entraînement sous forme d'une machine asynchrone, avec une unité de commande du moteur en tant qu'unité de commande de la fréquence statorique (10) et une unité de commande de la traction (11), où l'unité de commande de traction (11) forme une valeur seuil de fréquence statorique à vide (f_{LS, seuil}), et avec un dispositif formant une courbe caractéristique (3) formant une valeur seuil de fréquence statorique de courbe caractéristique (f_{KS, seuil}), où le dispositif formant une courbe caractéristique (3) et l'unité de commande de traction (11) sont reliés par une machine à additionner (9), qui forme une valeur seuil de fréquence statorique de commande f(_{RS, seuil}) par soustraction de la valeur seuil de fréquence statorique de courbe caractéristique (f_{KS}, ₛₑᵤᵢₗ) depuis la valeur seuil de fréquence statorique à vide (f_{LS}, ₛₑᵤᵢₗ) et impose la valeur seuil de fréquence statorique de commande f(_{RS, seuil}) de l'unité de commande de la fréquence statorique (10) comme valeur seuil de fréquence statorique (f_{S, seuil}), où
l'unité de commande de traction (11) présente une unité d'identification d'état (7), qui utilise la valeur instantanée réelle de fréquence statorique (f_{S, inst}), une valeur seuil de force de traction (F_{Z, seuil}), une vitesse axiale (V_{A}) et la valeur de vitesse du véhicule (V_{F}), et
où l'unité d'identification d'état (7) est reliée à un dispositif d'application (4), où l'unité d'identification d'état (7) actionne le dispositif d'application (4) par un signal d'application (sel₁),
où un mécanisme de commande de la force de traction (6) relié à l'entrée du dispositif d'application (4), est prévu pour la formation d'une première valeur de fréquence de commande (f_{LZRS, seuil}), où le mécanisme de commande de la force de traction (6) utilise la valeur instantanée de la force de traction (F_{Z, inst}) et la valeur seuil de la force de traction (F_{Z, seuil}),
où un mécanisme d'optimalisation de force de traction (5), relié à une autre entrée du dispositif d'application (4), est prévu pour la formation d'une deuxième valeur de fréquence de commande (F_{LZOS, seuil}), où le mécanisme d'optimalisation de la force de traction (5) utilise la valeur instantanée de la force de traction (F_{Z}, ᵢₙₛₜ) et la valeur de la vitesse axiale (v_{A}), et
où la machine à additionner (9) est reliée à la sortie du dispositif d'application (4).

5. Dispositif selon la revendication 4, **caractérisé en ce que** le mécanisme de commande de la force de traction (6) réalisé comme un mécanisme de commande intégrale-proportionnelle.

6. Dispositif selon la revendication 4, **caractérisé en ce que** l'unité d'identification d'état (7) est reliée à un deuxième dispositif d'application (8), où l'unité d'identification d'état (7) actionne le deuxième dispositif d'application (8) par un deuxième signal d'application (sel₂).

7. Dispositif selon la revendication 6, **caractérisé en ce que** la machine à additionner (9) est reliée à l'entrée du deuxième dispositif d'application (8),
qu'un dispositif de limitation (2) relié à une autre entrée du deuxième dispositif d'application (8), est prévu pour la formation d'une valeur seuil limite de la fréquence statorique (f_{BS}, seuil), où le dispositif de limitation (2) utilise la valeur instantanée de la force de traction (F_{Z, inst}) et la valeur de la vitesse axiale (V_{A}), et
que l'unité de commande de la fréquence statorique (10) est reliée à la sortie du deuxième dispositif d'application (8).

8. Dispositif selon l'une des revendications 4 à 7, **caractérisé en ce que** le dispositif est implémenté par au moins un microprocesseur digital.
